# EUROPÄISCHE PATENTSCHRIFT

(11) **EP 1 960 731 B1**
(45) Veröffentlichungstag und Bekanntmachung des Hinweises auf die Patenterteilung: **16.10.2013**
(21) Anmeldenummer: 06829460.2
(22) Anmeldetag: 08.12.2006
(51) Int. Cl.: B60R 21/2338, B60R 21/233, B60R 21/26, F42B 3/00

(54) **PYROTECHNISCHE AKTUATOREINHEIT, VERFAHREN ZU DEREN HERSTELLUNG SOWIE GASSACKMODUL MIT EINER SOLCHEN AKTUATOREINHEIT**
PYROTECHNIC ACTUATOR UNIT, METHOD FOR PRODUCING THE SAME AND AIRBAG MODULE COMPRISING AN ACTUATOR UNIT OF THIS TYPE
UNITE D'ACTIONNEMENT PYROTECHNIQUE, SON PROCEDE DE PRODUCTION, ET MODULE DE POCHE A GAZ POURVU D'UNE UNITE D'ACTIONNEMENT DE CE TYPE

(30) Priorität: 08.12.2005 DE 102005058721
(43) Veröffentlichungstag der Anmeldung: 27.08.2008
(73) Patentinhaber: TRW Airbag Systems GmbH, 84544 Aschau am Inn (DE)
(72) Erfinder: SCHÖNHUBER, Georg, 84565 Oberneukirchen (DE); ENZMANN, Ernst, 83224 Grassau (DE); NUIDING, Hannes, 84453 Mühldorf am Inn (DE)
(74) Vertreter: Mehnert, Bernhard
(86) Internationale Anmeldenummer: PCT/EP2006/011868
(87) Internationale Veröffentlichungsnummer: WO 2007/065715

(56) Entgegenhaltungen:
- EP-A- 1 710 532
- EP-A1- 0 600 791
- FR-A1- 2 796 715
- US-A1- 2005 057 027
- US-A1- 2005 127 649

## Beschreibung

Die Erfindung betrifft eine pyrotechnische Aktuatoreinheit zur Betätigung eines Fahrzeug-Sicherheitssystems, nach dem Oberbegriff von Patentanspruch 1.

Des weiteren umfaßt die Erfindung ein Gassackmodul für ein Fahrzeug-Sicherheitssystem mit einer solchen Aktuatoreinheit sowie ein Verfahren zur Herstellung einer pyrotechnischen Aktuatoreinheit.

In der Technik, insbesondere in der Fahrzeug-Sicherheitstechnik, werden Sprengbolzen als Aktuatoreinheiten eingesetzt. In der Regel sind dies äußerst robuste Metallbauteile, die über ein Gewinde befestigt werden und sehr hohe Kräfte aufnehmen können. Entsprechend groß ist die notwendige Aktivierungsenergie dieser Sprengbolzen, damit sie beispielsweise Gehäuseöffnungen freilegen, Bauteile (mitunter entgegen einer Druckkraft) verschieben oder sich selbst durchtrennen.

Bei modernen Fahrzeug-Sicherheitssystemen, insbesondere bei Gassackmodulen, gibt es Bestrebungen, das Sicherheitssystem immer individueller an verschiedene Parameter einer Crash-Situation anzupassen. Eine bekannte und vorteilhafte Möglichkeit ist dabei der Einsatz von Zugmitteln wie z.B. Fangbändern, durch deren Freigabe Abströmöffnungen geöffnet oder geschlossen werden. Mit solchen Zugmitteln kann darüber hinaus auch die Gassackgeometrie beeinflußt und/oder ein zusätzliches Gassackvolumen freigegeben werden.

Zur aktiven Zugmittelfreigabe wird eine sogenannte Fangbandfreigabeeinrichtung TAU (Tether Activation Unit) benötigt. Diese TAUs werden in der Regel durch vergleichsweise geringe Querkraftbelastungen auf Abscheren beansprucht. Herkömmliche Sprengbolzen sind für diese Einsatzfälle oft überdimensioniert und zu teuer.

In der US 2005/0057027 A1 (DE 10 2004 042 359 A1) ist beispielsweise eine pyrotechnische Aktuatoreinheit nach dem Oberbegriff des Anspruchs 1 offenbart, mit der Fangbandabschnitte in einem Gassackmodul zunächst fixiert sind und bei einer Betätigung der Aktuatoreinheit freigegeben werden. Diese Schrift zeigt einschraubbare Befestigungsvorrichtungen mit einem Metallgehäuse, wobei allgemein auch auf die Möglichkeit hingewiesen wird, daß ein Gehäuse der Befestigungsvorrichtung aus Plastik bzw. Kunststoff gefertigt ist. Darüber hinaus ist auch erwähnt, daß die einschraubbaren Gewindeabschnitte des Gehäuses als Einrastverbindungsstück ausgebildet sein können.

Die Aufgabe der vorliegenden Erfindung liegt darin, für mäßige Belastungen, insbesondere Querkraftbeanspruchungen, eine pyrotechnische Aktuatoreinheit zu schaffen, die bei geringem Bauraumbedarf preiswert herzustellen und einfach zu montieren ist.

Erfindungsgemäß wird die Aufgabe für eine pyrotechnische Aktuatoreinheit der eingangs genannten Art durch die kennzeichnenden Merkmale des Patentanspruch 1 gelöst. In den eingangs genannten Anwendungsfällen verhält sich das Kunststoffgehäuse ähnlich zuverlässig wie ein Metallgehäuse, ist aber im Vergleich zu traditionellen Metallgehäusen erheblich preisgünstiger. Verglichen mit einer einteiligen Gehäuseausführung aus Kunststoff ist die Ausführung aus einem ersten Kunststoffteil und einem zweiten Kunststoffteil etwas aufwendiger; sie bietet allerdings den Vorteil, daß der pyrotechnische Anzünder beim Herstellen der Aktuatoreinheit weniger stark erhitzt wird als z.B. bei einer einteiligen Kunststoffumspritzung. Eine mögliche Fehlauslösung des Anzünders infolge thermischer Belastung ist dadurch weitgehend ausgeschlossen.

In einer Ausführungsform ist im Außengehäuse eine Druckkammer gebildet, die einerseits vom Anzünder und andererseits vom Außengehäuse definiert ist. Diese Druckkammer ist nach einer Aktivierung des pyrotechnischen Anzünders für eine kontinuierliche Druckentwicklung im Außengehäuse und ein definiertes Auseinanderreißen des Außengehäuses besonders vorteilhaft. Weitere, Insbesondere verfahrenstechnische Vorteile bei der Herstellung der pyrotechnischen Aktuatoreinheit ergeben sich für Ausführungsvarianten, bei denen lediglich das erste Kunststoffteil und der pyrotechnische Anzünder die Druckkammer definieren.

Die Druckkammer ist bevorzugt im Bereich einer vordefinierten Bruchstelle des Außengehäuses vorgesehen. Der Innendruck in der Druckkammer steigt nach einer Aktivierung des Anzünders kontinuierlich an. Durch eine Sollbruchstelle im Bereich der Druckkammer lassen sich Ort und Zeitpunkt des Gehäusebruchs einfach festlegen.

In einer weiteren Ausführungsform bilden das erste Kunststoffteil und das zweite Kunststoffteil einen Aufnahmeraum im Außengehäuse aus, wobei der Aufnahmeraum wenigstens teilweise vom pyrotechnischen Anzünder ausgefüllt ist.

Insbesondere kann dabei die Druckkammer derjenige verbleibende Bereich des Aufnahmeraums sein, der nicht vom pyrotechnischen Anzünder ausgefüllt ist. Die Fertigung der pyrotechnischen Aktuatoreinheit ist in dieser Ausführungsform besonders einfach, da lediglich ein einziger vordefinierter Aufnahmeraum auszubilden ist. Die Druckkammer ergibt sich nach der Montage des pyrotechnischen Anzünders automatisch als "Restvolumen" des Aufnahmeraums, welches vom pyrotechnischen Anzünder nicht ausgefüllt wird.

In einer weiteren Ausführungsform ist der Aufnahmeraum vom ersten Kunststoffteil und vom zweiten Kunststoffteil begrenzt. Für den Fall, daß wenigstens eines der Kunststoffteile an den Anzünder angespritzt wird, werden in dieser Ausführungsform lediglich Teilbereiche der Anzünderoberfläche beim Anspritzen des jeweiligen Kunststoffteils erhitzt. Folglich ist die thermische Belastung und damit die Gefahr einer Fehlauslösung des Anzünders bei der Herstellung der pyrotechnischen Aktuatoreinheit gering.

In einer Ausführungsform ist das erste Kunststoffteil an den Anzünder angespritzt. In diesem Fall ist die Herstellung des ersten Kunststoffteils sehr einfach, da der Anzünder bereits abschnittsweise als Spritzgußform dient. Außerdem entsteht zwischen dem Anzünder und dem ersten Kunststoffteil eine Formschlußverbindung, so daß der Anzünder im ersten Kunststoffteil fixiert ist. Da sich in dieser Ausführungsform keine Druckkammer zwischen dem ersten Kunststoffteil und dem Anzünder ausbilden läßt, bietet es sich an, die Druckkammer bereits in den pyrotechnischen Anzünder zu integrieren. Hierfür kann der Anzünder eine Anzünderkappe aufweisen, die beabstandet von einer brennstoffgefüllten Brennkammer des Anzünders angeordnet ist, um die Druckkammer zu bilden. Das erste Kunststoffteil wird dann an den Anzünder, genauer die Anzünderkappe des Anzünders angespritzt.

In einer weiteren Ausführungsform ist das erste Kunststoffteil ein vorgefertigtes Spritzgußteil, und das- zweite Kunststoffteil ist an das erste Kunststoffteil angespritzt. Bei dieser Ausführungsform wird mit der Herstellung des zweiten Kunststoffteils gleichzeitig eine Verbindung zwischen dem ersten und zweiten Kunststoffteile hergestellt. Somit verringert sich der Herstellungsaufwand der pyrotechnischen Aktuatoreinheit, da auf separate Verbindungsmittel verzichtet werden kann.

Alternativ sind die- beiden Kunststoffteile miteinander verschweißt. Der Herstellungsaufwand ist durch den gesonderten Verbindungsvorgang zwar etwas höher, dafür können beide Kunststoffteile vorgefertigt werden.

Das erste Kunststoffteil ist an einem ersten Ende mit dem zweiten Kunststoffteil dauerhaft verbunden und weist bevorzugt im Bereich eines dem ersten Ende entgegengesetzten zweiten Endes einen Rastabschnitt zur Befestigung der Aktuatoreinheit auf. Der Rastabschnitt bietet zum einen eine schnelle und zuverlässige Befestigungsmöglichkeit für die Aktuatoreinheit und kann zum anderen mit geringem Aufwand an das erste Kunststoffteil angeformt werden.

Bevorzugt weist dabei das erste Kunststoffteil einen äußeren, seitlichen Führungsabschnitt auf, der dem zweiten Ende des ersten Kunststoffteils näher als der Rastabschnitt ist. Durch diesen Führungsabschnitt wird die Montage der Aktuatoreinheit an einem aufnehmenden Bauteil weiter vereinfacht.

In einer weiteren Ausführungsform ist das erste Kunststoffteil an einem ersten Ende mit dem zweiten Kunststoffteil dauerhaft verbunden und weist im Bereich eines dem ersten Ende entgegengesetzten zweiten Endes eine Verdrehsicherung auf. Mit einer solchen Verdrehsicherung sind insbesondere rotationssymmetrische Aktuatoreinheiten nach ihrer Montage in Umfangsrichtung fixiert.

Die Erfindung umfaßt auch ein Gassackmodul für ein Fahrzeug-Sicherheitssystem mit einem Gassack, einem Gasgenerator, einem Modulgehäuse und einer obengenannten pyrotechnischen Aktuatoreinheit, wobei ein Zugmittel vorgesehen ist, welches vor einer Aktivierung des pyrotechnischen Anzünders durch die Aktuatoreinheit fixiert ist und nach einer Aktivierung des pyrotechnischen Anzünders freigebeben ist. Da das verwendete Kunststoffmaterial des Außengehäuses und die bevorzugte Rastbefestigung der Aktuatoreinheit für übliche Beanspruchungen von Zugmittelfreigabeeinrichtungen gut geeignet sind, ist der Einsatz der pyrotechnischen Aktuatoreinheit als Zugmittelfreigabevorrichtung besonders vorteilhaft.

Vorzugsweise greift ein Ende des Zugmittels an einer vordefinierten Bruchstelle des Außengehäuses der pyrotechnischen Aktuatoreinheit an. Damit ist gewährleistet, daß das Zugmittel nach einer Aktivierung des pyrotechnischen Anzünders schnell und zuverlässig freigegeben wird:

Alternativ kann ein Ende des Zugmittels an einem Abschnitt des Außengehäuses der pyrotechnischen Aktuatoreinheit angreifen, der nach der Aktivierung des pyrotechnischen Anzünders von einem Befestigungsabschnitt der Aktuatoreinheit getrennt ist. Neben der ebenfalls schnellen und zuverlässigen Freigabe des Zugmittels ist in dieser Variante zusätzlich der Abschnitt des Außengehäuses, der sich nach der Aktivierung des pyrotechnischen Anzünders vom Befestigungsabschnitt trennt, durch das Zugmittel gesichert.

Im weiteren betrifft die Erfindung ein Verfahren zur Herstellung einer pyrotechnischen Aktuatoreinheit, mit einem pyrotechnischen Anzünder und einem Außengehäuse, in dem der pyrotechnische Anzünder untergebracht ist, wobei das Außengehäuse aus einem ersten Gehäuseteil und einem zweiten Gehäuseteil besteht, mit den folgenden Verfahrensschritten:
a) Das erste Gehäuseteil wird mit einem Aufnahmeraum für den pyrotechnischen Anzünder gefertigt;
b) der pyrotechnische Anzünder wird in den Aufnahmeraum eingeführt; und
c) das zweite Gehäuseteil wird an den pyrotechnischen Anzünder und an ein erstes Ende des ersten Gehäuseteils angespritzt, so daß der Aufnahmeraum im wesentlichen geschlossen ist.

Durch dieses Verfahren wird ein zweitteiliges Außengehäuse für einen pyrotechnischen Anzünder geschaffen, mit dem Vorteil, daß der pyrotechnische Anzünder beim Herstellen der Aktuatoreinheit weniger stark erhitzt wird, als z.B. bei einer einteiligen Kunststoffumspritzung. Der erhöhte Herstellungsaufwand für ein zweiteiliges Außengehäuse wird dadurch minimiert, daß mit der Fertigung des zweiten Gehäuseteils gleichzeitig auch eine Verbindung zum ersten Gehäuseteil hergestellt wird. Ein separater Verfahrensschritt zur Verbindung der beiden Gehäuseteile kann dabei genauso eingespart werden wie zusätzliche Verbindungsmittel.

Vorzugsweise wird das erste Gehäuseteil im Schritt a) als Spritzgußteil hergestellt. Das Außengehäuse der Aktuatoreinheit besteht damit im wesentlichen aus Kunststoff, woraus sich niedrige Materialkosten und ein geringes Gewicht der Aktuatoreinheit ergeben.

In einer Verfahrensvariante bildet sich im Schritt b) eine Preßpassung zwischen dem pyrotechnischen Anzünder und einer Seitenwand des Aufnahmeraums aus. Der Anzünder ist durch die Preßpassung relativ zum ersten Gehäuseteil fixiert; es entsteht ein stabiles Zwischenprodukt aus pyrotechnischem Anzünder und erstem Gehäuseteil, welches im weiteren Verfahren besser handhabbar ist als lose zusammengesteckte Teile.

Vorzugsweise wird der pyrotechnische Anzünder im Schritt b) nicht vollständig in den Aufnahmeraum eingeführt, so daß der Anzünder und das erste Gehäuseteil eine Druckkammer ausbilden. Dies stellt eine sehr einfache Möglichkeit dar, die für eine kontrollierte und definierte Gehäusetrennung vorteilhafte Druckkammer zu schaffen. Für den Fall, daß sich zwischen dem pyrotechnischen Anzünder und der Seitenwand des Aufnahmeraums eine Preßpassung ausbildet, ist gleichzeitig sichergestellt, daß die Spritzgußmasse des zweiten Gehäuseteils beim Anspritzen des zweiten Gehäuseteils im Verfahrensschritt c) nicht in die Druckkammer eindringt und diese ausfüllt.

Bei der Fertigung des ersten Gehäuseteils kann im Aufnahmeraum ein Anschlag für den pyrotechnischen Anzünder ausgebildet werden. Zum einen hat der Verfahrensschritt b) durch diesen Anschlag ein definiertes Ende, zum anderen ist durch den Anschlag eine genaue Festlegung des Druckkammervolumens möglich.

In einer weiteren Verfahrensvariante bildet sich zwischen dem pyrotechnischen Anzünder und dem zweiten Gehäuseteil eine Formschlußverbindung aus, so daß der Anzünder sicher am zweiten Gehäuseteil fixiert ist.

Das erste Ende des ersten Gehäuseteils wird in einer besonders bevorzugten Verfahrensvariante im Schritt a) so profiliert gefertigt, daß die beiden Gehäuseteile nach dem Anspritzen und Aushärten des zweiten Gehäuseteils eine unlösbare Formschlußverbindung ausbilden. Durch diese Verbindungsvariante entsteht keine Schwachstelle im Verbindungsbereich zwischen dem ersten und zweiten Gehäuseteil, so daß das Außengehäuse zuverlässig an einer üblicherweise vorgesehenen Sollbruchstelle bricht. Außerdem entsteht durch diese Verbindung der beiden Gehäuseteile eine sogenannte Labyrinthdichtung, die sich durch eine besonders hohe Dichtigkeit auszeichnet. Ein unerwünschter Leckageverlust nach der Aktivierung des pyrotechnischen Anzünders kann dadurch vermieden werden.

Weitere Merkmale und Vorteile der Erfindung ergeben sich aus der nachfolgenden Beschreibung bevorzugter Ausführungsformen unter Bezugnahme auf die Zeichnungen. In diesen zeigen:
- Figur 1 eine perspektivische Ansicht einer erfindungsgemäßen, pyrotechnischen Aktuatoreinheit gemäß einer ersten Ausführungsform;
- Figur 2 ausschnittsweise ein erfindungsgemäßes Gassackmodul mit einer montierten, erfindungsgemäßen Aktuatoreinheit gemäß Figur 1;
- Figur 3 ausschnittsweise ein erfindungsgemäßes Gassackmodul mit einer montierten, erfindungsgemäßen Aktuatoreinheit gemäß einer zweiten Ausführungsform;
- Figur 4 eine perspektivische Schnittansicht der erfindungsgemäßen, pyrotechnischen Aktuatoreinheit gemäß Figur 3;
- Figur 5 einen Schnitt durch die pyrotechnische Aktuatoreinheit gemäß Figur 3 mit hervorgehobenen Schweißbereichen;
- Figur 6 eine perspektivische Schnittansicht einer erfindungsgemäßen, pyrotechnischen Aktuatoreinheit gemäß einer dritten Ausführungsform;
- Figur 7 ausschnittsweise ein erfindungsgemäßes Gassackmodul mit der erfindungsgemäßen Aktuatoreinheit gemäß Figur 6;
- Figur 8 eine perspektivische Ansicht der pyrotechnischen Aktuatoreinheit gemäß Figur 6; und
- Figur 9 eine weitere perspektivische Ansicht der pyrotechnischen Aktuatoreinheit gemäß Figur 6.

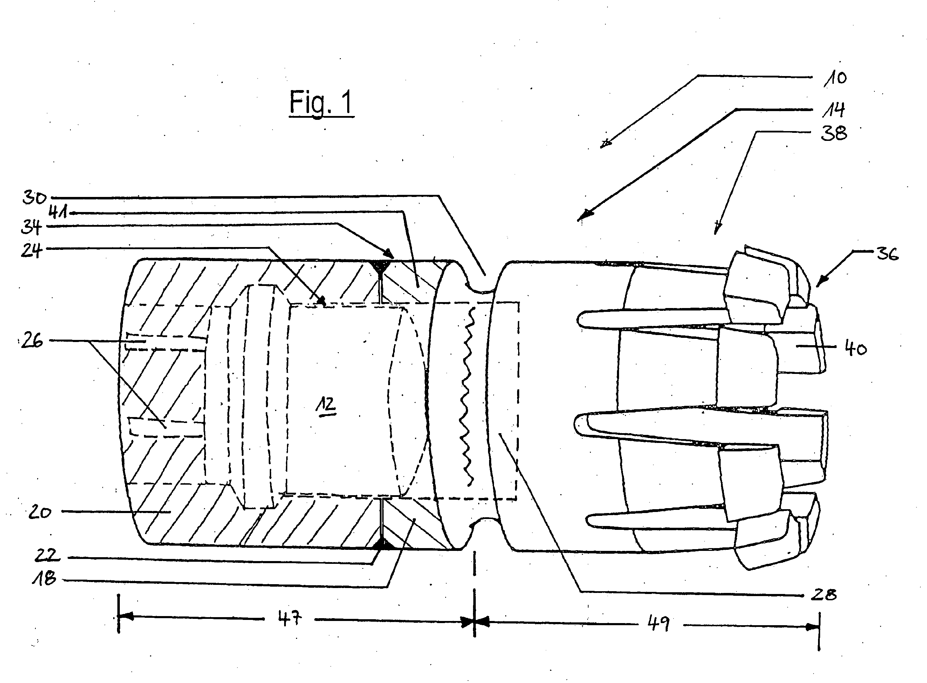

Die Figur 1 zeigt eine perspektivische Ansicht einer pyrotechnischen Aktuatoreinheit 10 gemäß einer ersten Ausführungsform, mit einem pyrotechnischen Anzünder 12 (gestrichelt dargestellt) und einem Außengehäuse 14 aus Kunststoff, in dem der pyrotechnische Anzünder 12 untergebracht ist, wobei das Außengehäuse 14 durch eine Aktivierung des Anzünders 12 bricht. Dabei ist im Gegensatz zu einem Aufplatzen von Gehäusemembranen o.ä. unter dem Brechen- des Außengehäuses 14 tatsächlich eine Gehäusezerstörung- zu verstehen, bei der wenigstens ein lasttragendes Gehäusebauteil in wenigstens zwei Teile bricht. Das Außengehäuse 14 besteht aus einem ersten Kunststoffteil 18 und einem zweiten Kunststoffteil 20, wobei die beiden Kunststoffteile 18, 20 dauerhaft miteinander verbunden sind. In der ersten Ausführungsform sind die Kunststoffteile 18, 20 verschweißt, vorzugsweise laserverschweißt. Die entsprechende Schweißnaht ist in Figur 1 schematisch dargestellt und trägt das Bezugszeichen 22. Nach einer Aktivierung des pyrotechnischen Anzünders 12 bricht das Außengehäuse 14, vorzugsweise das zweite Kunststoffteil 20 des Außengehäuses 14

Das erste Kunststoffteil 18 und das zweite Kunststoffteil 20 bilden im Außengehäuse 14 einen weitgehend geschlossenen Aufnahmeraum 24 aus, wobei der Aufnahmeraum 24 wenigstens teilweise vom pyrotechnischen Anzünder 12 ausgefüllt ist und lediglich Kontaktstifte 26 des Anzünders 12 durch das zweite Kunststoffteil 20 aus dem Aufnahmeraum 24 herausragen. Über die beiden Kontaktstifte ist der Anzünder 12 mit einer Stromquelle (nicht gezeigt) verbunden, die unter vorgegebenen Bedingungen einen Stromimpuls aussendet, der zu einer Aktivierung des pyrotechnischen Anzünders 12 führt.

Um bei einer Aktivierung des pyrotechnischen Anzünders einen kontrollierten Druckverlauf sowie einen definierten, reproduzierbaren Bruch des Außengehäuses 14 zu erreichen, ist im Außengehäuse 14 eine Druckammer 16 ausgebildet, die einerseits vom Anzünder 12 und andererseits vom Außengehäuse 14, in der dargestellten ersten Ausführungsform sogar nur vom ersten Kunststoffteil 18 des Außengehäuses 14 definiert wird.

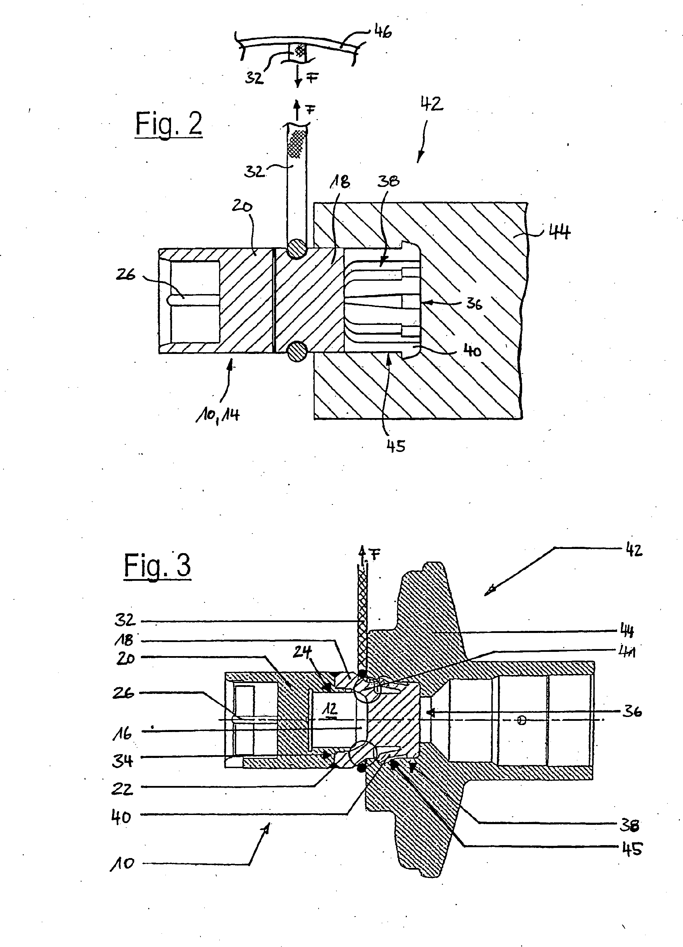

Der Aufnahmeraum 24 des Außengehäuses 14 ist vom ersten Kunststoffteil 18 und vom zweiten Kunststoffteil 20 begrenzt. Die Druckkammer 16 ergibt sich in der Figur 1 als der verbleibende Bereich des Aufnahmeraums 24, der nicht vom pyrotechnischen Anzünder 12 ausgefüllt wird. Durch die Ausbildung einer Druckkammer 16 im Außengehäuse 14 entstehen nach einer Aktivierung des pyrotechnischen Anzünders 12 keine lokalen, unkontrollierbaren Spannungsspitzen in den Wänden des Aufnahmeraum 24, sondern ein im wesentlichen kontinuierlicher Anstieg des Innendrucks in der Druckkammer 16 bzw. im Aufnahmeraum 24. Der Innendruck steigt dabei solange an, bis das Außengehäuse 14 an seiner schwächsten Stelle bricht. Um einen definierten undreproduzierbaren Bruch herbeizuführen, ist im Außengehäuse 14 eine vordefinierte Bruchstelle 30 vorgesehen, die sich im Bereich der Druckkammer 16 befindet. In der Figur 1 ist diese vordefinierten Bruchstelle 30 eine außenseitig umlaufende Nut, wobei diese Nut gleichzeitig ein am zweiten Kunststoffteil 20 angreifendes Zugmittel 32 fixieren kann (vgl. Figur 2).

Das erste Kunststoffteil 18 ist an einem ersten Ende 34 mit dem zweiten Kunststoffteil 20 verschweißt. Im Bereich eines dem ersten Ende 34 entgegengesetzten zweiten Endes 36 weist das erste Kunststoffteil 18 einen Rastabschnitt 38 zur Befestigung der Aktuatoreinheit 10 auf. Das erste Kunststoffteil 18 der pyrotechnischen Aktuatoreinheit 10 besitzt in Figur 1 eine im wesentlichen zylindrische, teilweise hohlzylindrische Form. Der Rastabschnitt 38 umfaßt mehrere über den Umfang verteilte Rastelemente 40, die jeweils an ihrem einen axialen Ende einstückig an das erste Kunststoffteil 18 angeformt sind und an ihrem anderen, freien axialen Ende Rasthaken aufweisen. Die Rasthaken stehen in radialer Richtung über die Außenseite des Außengehäuses 14 vor und sind aufgrund der Elastizität der Rastelemente 40 in radialer Richtung beweglich.

Im folgenden wird kurz die Fertigung der pyrotechnischen Aktuatoreinheit 10 gemäß der ersten Ausführungsform beschrieben. Das erste Kunststoffteil wird als vorgefertigtes Spritzgußteil hergestellt, in dem am ersten Ende 34 eine Ausnehmung ausgebildet ist, die einen Teil des späteren Aufnahmeraums 24 bildet. Der pyrotechnische Anzünder 12 wird dann in diese Ausnehmung eingeschoben, wobei er vorzugsweise mit einer umlaufenden Wand 41 des ersten Kunststoffsteils 18 eine Preßpassung ausbildet. Der Anzünder 12 wird aber in diesem Verfahrensschritt vorzugsweise nicht vollständig in die Ausnehmung eingeschoben, wodurch auf einfache Art und Weise die Druckkammer 16 entsteht. Um ein definiertes und reproduzierbares Druckkammervolumen zu erhalten, ist in der Ausnehmung des ersten Kunststoffteils 18 vorzugsweise ein Anschlag ausgebildet. Hierzu können beispielsweise im Bereich der Ausnehmung Stifte- angeformt sein, die als Abstandshalter dienen. Alternativ kann der Anschlag auch durch einen in der Ausnehmung umlaufenden Wulst oder eine in Einschubrichtung des Anzünders 12 vorgesehene Verjüngung ausgebildet sein. Das zweite Kunststoffteil 20 wird anschließend entweder direkt an den pyrotechnischen Anzünder 12 und/oder das erste Kunststoffteil 18 angespritzt oder als ebenfalls vorgefertigtes Spritzgußteil auf den Anzünder 12 geschoben. Schließlich werden die beiden Kunststoffteile 18, 20 miteinander verschweißt, so daß sie dicht und dauerhaft miteinander verbunden sind.

In einigen Ausführungsvarianten ist es auch möglich, zunächst das zweite Kunststoffteil 20 an den Anzünder 12 anzuspritzen und danach das vorgefertigte erste Kunststoffteil 18 aufzustecken und mit dem zweiten Kunststoffteil 20 zu verschweißen.

Die Figur 2 zeigt einen Ausschnitt aus einem Gassackmodul 42, an dem die Aktuatoreinheit 10 befestigt ist. In einem aufnehmenden Bauteil 44 (z.B. ein Modulgehäuse oder ein Gasgenerator) des Gassackmoduls 42 muß zur Befestigung eine im wesentlichen zylindrische Aussparung 45 mit Hinterschnitt vorgesehen sein. Bei der Montage wird die pyrotechnische Aktuatoreinheit 10 dann in axialer Richtung in diese Aussparung 45 eingeführt. Dabei werden die Rastelemente 40 zunächst in radialer Richtung nach innen, d.h. in Richtung zur Gehäuseachse, elastisch verformt. Schließlich schnappen die Rastelemente 40 in eine Rastposition der pyrotechnischen Aktuatoreinheit 10 radial nach außen und greifen in den Hinterschnitt der Aussparung 45 des aufnehmenden Bauteils. 44 ein. Die Aktuatoreinheit 10 ist damit zuverlässig und fest am aufnehmenden Bauteil 44 befestigt. Anschließend kann, wie in Figur 2 gezeigt, das Zugmittel 32 an der Aktuatoreinheit 10 abgebracht werden.

Das Zugmittel 32 ist z.B. ein Fangband oder eine reißfeste Schnur, wobei ein Ende des Zugmittels 32 an der pyrotechnischen Aktuatoreinheit 10, vorzugsweise unmittelbar an der vordefinierten Bruchstelle des Außengehäuses 14, befestigt ist. Das andere, entgegengesetzte Ende des Zugmittels 32 ist beispielsweise mit einem Gassack 46 des Gassackmoduls 42 verbunden, wobei das Zugmittel 32 bei einer Entfaltung des Gassacks 46 mit einer Kraft F beaufschlagt werden kann.

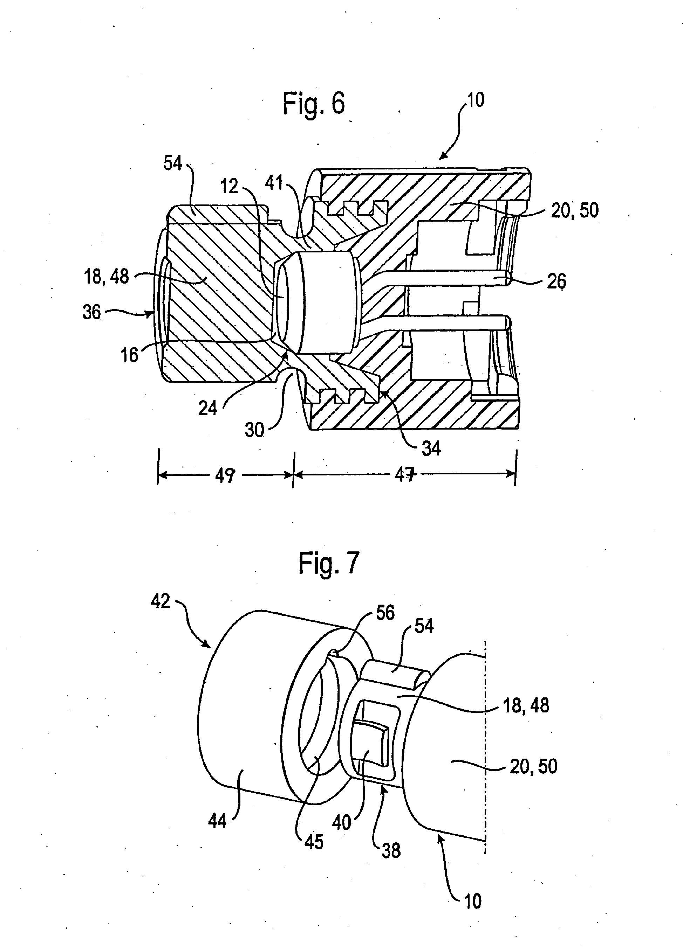

In einer weiteren (nicht dargestellten) Ausführungsvariante der Aktuatoreinheit 10 greift das Zugmittel 32 an einem Abschnitt 47 (vgl. Figuren 1 und 6) des Außengehäuses 14 an, der nach der Aktivierung des pyrotechnischen Anzünders 12 von einem Befestigungsabschnitt 49 (vgl. Figuren 1 und 6) der pyrotechnischen Aktuatoreinheit 10 getrennt ist.

Die Figur 3- zeigt einen Ausschnitt aus einem- Gassackmodul 42, an dem die Aktuatoreinheit 10 gemäß einer zweiten Ausführungsform befestigt ist, wobei diese der ersten Ausführungsform sehr ähnelt. Ein Unterschied liegt darin, daß die vordefinierte Bruchstelle 30 hier nicht als Nut bzw. Kerbe ausgeführt ist. Der Bruch des Außengehäuses 14 der Aktuatoreinheit 10 wird in dem in Figur 3 eingekreisten Bereich nahe der Oberfläche des aufnehmenden Bauteils 44 erfolgen, an einer Stelle, wo die Wand 41 des ersten Kunststoffteils 18 am schwächsten ist. Das Außengehäuse 14 verjüngt sich in diesem Bereich, so daß es mit der Oberfläche des aufnehmenden Bauteils 44 eine keilförmige Nut bildet, in der das zu befestigende Ende des Zugmittels 32 wenigstens teilweise aufgenommen werden kann und somit axial gesichert ist.

Ein weiterer Unterschied zur Figur 2 liegt in der Ausführung des Rastabschnitts 38 im Bereich des zweiten Endes 36 des ersten Kunststoffteils 18, worauf bei der Beschreibung der Figuren 7 bis 9 genauer eingegangen wird.

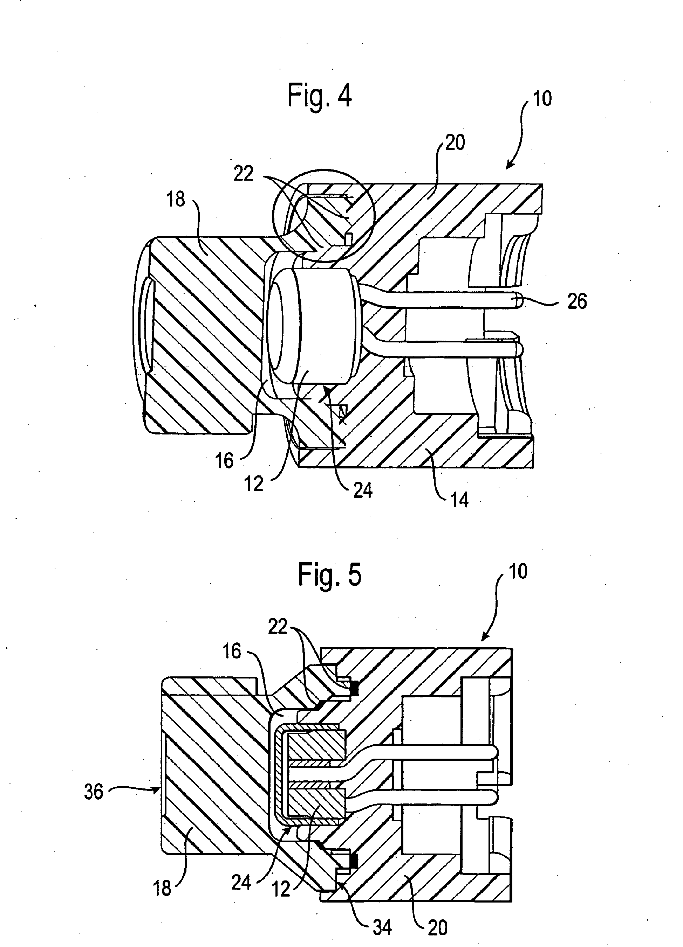

Die Figuren 4 und 5 zeigen Längsschnitte durch die pyrotechnische Aktuatoreinheit 10 gemäß Figur 3, in denen der in den Figuren 1 bis 3 lediglich schematisch angedeutete Verbindungsbereich des ersten und zweiten Kunststoffteils 18, 20 in einer möglichen, beispielhaften Detailausführung dargestellt ist. Nach einer Laserverschweißung der beiden Kunststoffteile 18, 20 ist der Verbindungsbereich (eingekreister Bereich in Figur 4) kaum noch als solcher zu erkennen, da durch die Verschweißung ein im wesentlichen einstückiges Außengehäuse 14 entsteht. Im Schnitt der Figur 5 sind die umlaufenden Schweißbereiche fett hervorgehoben.

Die Figur 6 zeigt eine dritte Ausführungsform der pyrotechnischen Aktuatoreinheit 10 in einer Schnittansicht, ähnlich Figur 4. Der wesentliche Unterschied zu den vorhergehenden Ausführungsformen besteht in der Art der Herstellung der dauerhaften Verbindung zwischen einem ersten und einem zweiten Gehäuseteil 48, 50. Das zweite Gehäuseteil 50 ist hier nicht mit dem ersten Gehäuseteil 48 verschweißt, sondern direkt an das erste Gehäuseteil 48 angespritzt.

Das Verfahren zur Herstellung dieser pyrotechnischen Aktuatoreinheit 10 mit dem pyrotechnischen Anzünder 12 und dem Außengehäuse 14, in dem der pyrotechnische Anzünder 12 untergebracht ist, umfaßt folgende Schritte: Zunächst wird das erste Gehäuseteile 48 mit der Ausnehmung für den pyrotechnischen Anzünder 12 gefertigt, woraufhin der Anzünder 12 in die Ausnehmung eingeführt wird. Schließlich wird das zweite Gehäuseteil 50 an den pyrotechnischen Anzünder 12 und an das erste Ende 34 des ersten Gehäuseteils 48 angespritzt, so daß der Aufnahmeraum 24 für den pyrotechnischen Anzünder 12 im wesentlichen geschlossen ist.

Bei diesem Verfahren kann das erste Gehäuseteil 48 aus einem beliebigen Material, beispielsweise auch aus Metall hergestellt sein. Für den Fall, daß das erste Gehäuseteil aus Kunststoff besteht, entsprechen die Gehäuseteile 48, 50 den zuvor beschriebenen Kunststoffteilen 18, 20. Das erste Gehäuseteil 48 ist dann besonders bevorzugt ein vorgefertigtes Spritzgußteil.

Auch in Figur 6 ist der pyrotechnische Anzünder 12 beim Einführen in die Ausnehmung nicht soweit eingeführt worden, daß er die Ausnehmung im ersten Gehäuseteil 48 vollständig ausfüllt. Die Ausnehmung im ersten Gehäuseteil 48 ist in Einführrichtung des Anzünders 12 verjüngt und bildet damit einen Anschlag für den pyrotechnischen Anzünder 12. Somit ist gewährleistet, daß das erste Gehäuseteil 48 und der pyrotechnische Anzünder 12 die Druckkammer 16 definieren.

Beim Einführen des pyrotechnischen Anzünders 12 in die Ausnehmung bildet sich zwischen dem Anzünder 12 und der umlaufenden Wand 41 des ersten Gehäuseteils 48 eine weitgehend dichte Preßpassung aus. Dadurch wird verhindert, daß beim Anspritzen des zweiten Gehäuseteils 50 Spritzgußmasse in die Druckkammer 16 eintreten und diese ausfüllen kann. Durch das Anspritzen des zweiten Gehäuseteils 50 an den pyrotechnischen Anzünder 12 entsteht automatisch eine Formschlußverbindung zwischen Anzünder 12 und zweitem Gehäuseteil 50, so daß der Anzünder 12 sowie das erste und zweite Gehäuseteil 48, 50 aneinander fixiert und fest miteinander verbunden sind.

Besonders vorteilhaft ist die in Figur 6 dargestellte Verbindungsausführung der beiden Gehäuseteile 48, 50. Das erste Ende 34 des ersten Gehäuseteils 48 wird dabei so profiliert gefertigt, daß die beiden Gehäuseteile 48, 50 nach dem Anspritzen und Aushärten des zweiten Gehäuseteils 50 eine unlösbare Formschlußverbindung ausbilden. Dadurch entsteht ohne zusätzliches Verschweißen eine sehr feste und zuverlässige Verbindung, die keine Schwachstelle des Außengehäuses 14 dargestellt. Somit reißt das Außengehäuse 14 zuverlässig an einer vordefinierten Bruchstelle 30 und nicht im Verbindungsbereich der Gehäuseteile 48, 50. Darüber hinaus wird durch die dargestellte Profilierung auch eine Art Labyrinthdichtung zwischen dem ersten und zweiten Gehäuseteil 48, 50 geschaffen, die sich durch eine sehr hohe Dichtigkeit auszeichnet. Unerwünschte Leckageverluste nach einer Aktivierung des pyrotechnischen Anzünders 12, die sich nachteilig auf die Druckentwicklung in der Druckkammer 16 auswirken, werden somit weitgehend verhindert.

Die Figur 7 zeigt einen Detailausschnitt aus dem Gassackmodul 42 im Bereich der Verbindung zwischen der pyrotechnischen Aktuatoreinheit 10 und dem aufnehmenden Bauteil 44 des Gassackmoduls 42. Es ist gut zu erkennen, daß das erste Gehäuseteil 48 einen Rastabschnitt 38 zur Befestigung der Aktuatoreinheit 10 aufweist. Im Unterschied zu Figur 1 weist das erste Gehäuseteil 48 jedoch auch einen äußeren, seitlichen Führungsabschnitt 52 auf, der dem zweiten Ende 36 des ersten Gehäuseteils 48 näher als der Rastabschnitt 38 ist. Dieser Führungsabschnitt 52 erleichtert die Montage der pyrotechnischen Aktuatoreinheit 10 am aufnehmenden Bauteil 44. Ferner ist im Bereich des zweiten Endes 36 des ersten Gehäuseteils 48 eine Verdrehsicherung 54 vorgesehen. Diese Verdrehsicherung 54 ist im vorliegenden Fall als Wulst ausgebildet, der sich in Montagerichtung der Aktuatoreinheit 10 erstreckt und mit einer Nut 56 in der Aussparung 45 des aufnehmenden Bauteil 44 zusammenwirkt, so daß im montierten Zustand ein Verdrehen der Aktuatoreinheit 10 relativ zum aufnehmenden Bauteil 44 verhindert ist.

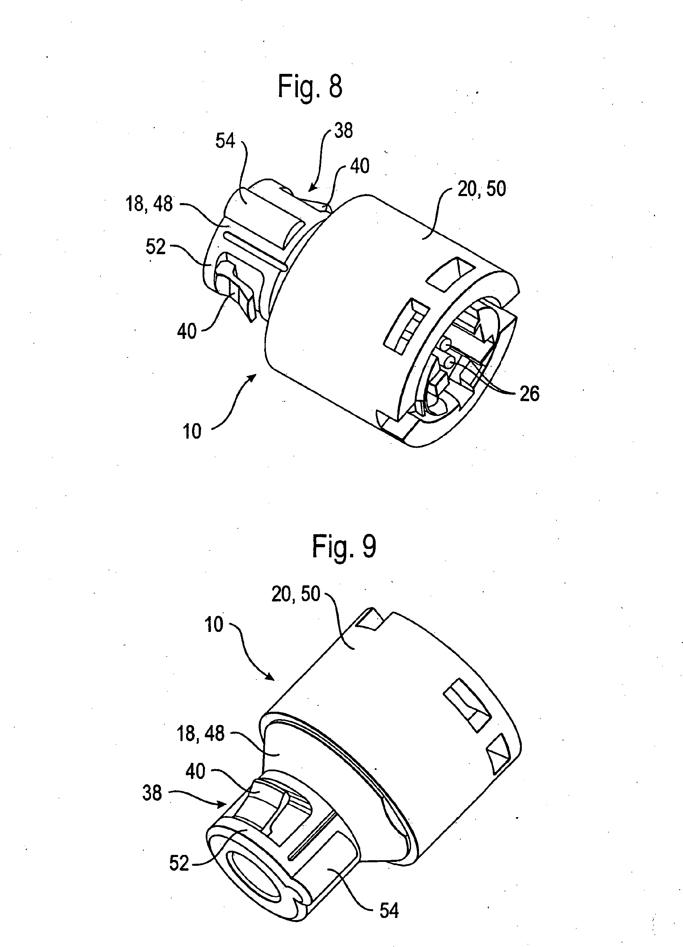

Die Figuren 8 und 9 zeigen perspektivische Ansichten der Aktuatoreinheit 10, wobei insbesondere die Rastelemente 40 des Rastabschnitts 38 sowie der Führungsabschnitt 52 und die. Verdrehsicherung 54 gut zu erkennen sind.-Außerdem sind in Figur 8 die beiden Kontaktstifte 26 zu sehen, über die der pyrotechnische Anzünder 12 aktiviert werden kann. Das zweite Gehäuseteil 48 ist im Bereich der Kontaktstifte 26 als Steckverbinder ausgebildet, der mit einem entsprechenden Gegenstück an einem Stromkabel eine feste Verbindung eingehen kann.

## Patentansprüche

1. Pyrotechnische Aktuatoreinheit zur Betätigung eines Fahrzeug-Sicherheitssystems, mit einem pyrotechnischen Anzünder (12) und einem Außengehäuse (14) aus Kunststoff, in dem der pyrotechnische Anzünder (12)
untergebracht ist, wobei im Außengehäuse (14) eine Druckkammer (16) gebildet ist, das Außengehäuse (14) eine vordefinierte Bruchstelle (30) aufweist, die zum Angreifen eines Zugmittels (32) geeignet ist, wobei das Außengehäuse (14) aus einem ersten Kunststoffteil (18) und einem zweiten Teil (20) besteht, und wobei die beiden Teile (18, 20) dauerhaft miteinander verbunden sind, **dadurch gekennzeichnet, dass** die Druckkammer (16) ausschließlich von dem Anzünder (12) und von dem Außengehäuse (14) definiert ist, und dass das zweite Teil (20) ein Kunststoffteil ist.

2. Pyrotechnische Aktuatoreinheit nach Anspruch 1, **dadurch**
**gekennzeichnet, daß** der Anzünder (12) und das erste Kunststoffteil (18) die Druckkammer (16) definieren.

3. Pyrotechnische Aktuatoreinheit nach Anspruch 1 oder 2, **dadurch gekennzeichnet, daß** die Druckkammer (16) im Bereich einer vordefinierten Bruchstelle (30) des Außengehäuses (14) vorgesehen ist.

4. Pyrotechnische Aktuatoreinheit nach einem der vorhergehenden Ansprüche, **dadurch gekennzeichnet, daß** das erste Kunststoffteil (18) und das zweite Kunststoffteil (20) einen Aufnahmeraum (24) im Außengehäuse (14) ausbilden, wobei der Aufnahmeraum (24) wenigstens teilweise vom pyrotechnischen Anzünder (12) ausgefüllt ist.

5. Pyrotechnische Aktuatoreinheit nach einem der Ansprüche 1 bis 3 und Anspruch 4, **dadurch gekennzeichnet, daß** die Druckkammer (16) der verbleibende Bereich des Aufnahmeraums (24) ist, der nicht vom pyrotechnischen Anzünder (12) ausgefüllt ist.

6. Pyrotechnische Aktuatoreinheit nach Anspruch 4 oder 5, **dadurch gekennzeichnet, daß** der Aufnahmeraum (24) vom ersten Kunststoffteil (18) und vom zweiten Kunststoffteil (20) begrenzt ist.

7. Pyrotechnische Aktuatoreinheit nach einem der vorhergehenden Ansprüche, **dadurch gekennzeichnet, daß** das erste Kunststoffteil (18) an den Anzünder (12) angespritzt ist.

8. Pyrotechnische Aktuatoreinheit nach einem der Ansprüche 1 bis 6, **dadurch gekennzeichnet, daß** das erste Kunststoffteil (18) ein vorgefertigtes Spritzgußteil ist und das zweite Kunststoffteil (20) an das erste Kunststoffteil (18) angespritzt ist.

9. Pyrotechnische Aktuatoreinheit nach einem der Ansprüche 1 bis 7, **dadurch gekennzeichnet, daß** die beiden Kunststoffteile (18, 20) miteinander verschweißt sind.

10. Pyrotechnische Aktuatoreinheit nach einem der vorhergehenden Ansprüche, **dadurch gekennzeichnet, daß** das erste Kunststoffteil (18) an einem ersten Ende (34) mit dem zweiten Kunststoffteil (20) dauerhaft verbunden ist, und im Bereich eines dem ersten Ende (34) entgegengesetzten zweiten Endes (36) einen Rastabschnitt (38) zur Befestigung der Aktuatoreinheit (10) aufweist.

11. Pyrotechnische Aktuatoreinheit nach Anspruch 10, **dadurch gekennzeichnet, daß** das erste Kunststoffteil (18) einen äußeren, seitlichen Führungsabschnitt (52) aufweist, der dem zweiten Ende (36) des ersten Kunststoffteils (18) näher als der Rastabschnitt (38) ist.

12. Pyrotechnische Aktuatoreinheit nach einem der vorhergehenden Ansprüche, **dadurch gekennzeichnet, daß** das erste Kunststoffteil (18) an einem ersten Ende (34) mit dem zweiten Kunststofftei (20) dauerhaft verbunden ist, und im Bereich eines dem ersten Ende (34) entgegengesetzten zweiten Endes (36) eine Verdrehsicherung (54) aufweist.

13. Gassackmodul für ein Fahrzeug-Sicherheitssystem, mit einem Gassack (46), einem Gasgenerator, einem Modulgehäuse und einer pyrotechnischen Aktuatoreinheit (10) nach einem der vorhergehenden Ansprüche, **dadurch gekennzeichnet, daß** ein Zugmittel (32) vorgesehen ist, welches vor einer Aktivierung des pyrotechnischen Anzünders (12) durch die Aktuatoreinheit (10) fixiert ist und nach einer Aktivierung des pyrotechnischen Anzünders (12) freigegeben ist.

14. Gassackmodul nach Anspruch 13, **dadurch gekennzeichnet; daß** ein Ende des Zugmittels (32) an einer vordefinierten Bruchstelle (30) des Außengehäuses (14) der pyrotechnischen Aktuatoreinheit (10) angreift.

15. Gassackmodul nach Anspruch 13 oder 14, **dadurch gekennzeichnet, daß** ein Ende des Zugmittels (32) an einem Abschnitt (47) des Außengehäuses (14) der pyrotechnischen Aktuatoreinheit (10) angreift, der nach der Aktivierung des pyrotechnischen Anzünders (12) von einem Befestigungsabschnitt (49) der pyrotechnischen Aktuatoreinheit (10) getrennt ist.

16. Verfahren zur Herstellung einer pyrotechnischen Aktuatoreinheit (10), mit einem pyrotechnischen Anzünder (12) und einem aus Kunststoff hergestellten Außengehäuse (14), in dem der pyrotechnische Anzünder (12) untergebracht ist, wobei das Außengehäuse (14) aus einem ersten Kunststoffteil (18) und einem zweiten Kunststoffteil (20) besteht, die dauerhaft miteinander verbunden sind, und wobei im Außengehäuse (14) eine Druckkammer (16) gebildet wird, die ausschließlich von dem Anzünder (12) und von dem Außengehäuse (14) definiert ist, und wobei das Außengehäuse (14) eine vordefinierte Bruchstelle (30) aufweist, die zum Angreifen eines Zugmittels (32) geeignet ist, **gekennzeichnet durch** folgenden Schritt:
Verschweißen der beiden Kunststoffteile (18, 20), so dass sie im Außengehäuse (14) einen weitgehend geschlossenen Aufnahmeraum (24) ausbilden, wobei der Aufnahmeraum (24) wenigstens teilweise von dem pyrotechnischen Anzünder (12) ausgefüllt ist, und lediglich Kontaktstifte (26) des Anzünders (12) **durch** das zweite Kunststoffteil (20) aus dem Aufnahmeraum (24) herausragen.

17. Verfahren zur Herstellung einer pyrotechnischen Aktuatoreinheit (10), mit einem pyrotechnischen Anzünder (12) und einem aus Kunststoff hergestellten Außengehäuse (14), in dem der pyrotechnische Anzünder (12) untergebracht ist, wobei das Außengehäuse
(14) aus einem ersten Gehäuseteil (18, 48) und einem zweiten Gehäuseteil (20, 50) besteht und wobei im Außengehäuse (14) eine Druckkammer (16) gebildet wird, die ausschließlich von dem Anzünder (12) und von dem Außengehäuse (14) definiert ist, und wobei das Außengehäuse (14) eine vordefinierte Bruchstelle (30) aufweist, die zum Angreifen eines Zugmittels (32) geeignet ist, **gekennzeichnet durch** die folgenden Schritte:
a) das erste Gehäuseteil (48) wird mit einer Ausnehmung für den pyrotechnischen Anzünder (12) gefertigt;
b) der pyrotechnische Anzünder (12) wird in die Ausnehmung eingeführt;
c) das zweite Gehäuseteil (50) wird an den pyrotechnischen Anzünder (12) und an ein erstes Ende (34) des ersten Gehäuseteils (48) angespritzt, so daß ein Aufnahmeraum (24) für den pyrotechnischen Anzünder (12) im wesentlichen geschlossen ist.

18. Verfahren nach Anspruch 17, **dadurch gekennzeichnet, daß** das erste Gehäuseteil (48) im Schritt a) als Spritzgußteil hergestellt wird.

19. Verfahren nach Anspruch 17 oder 18, **dadurch gekennzeichnet, daß** sich im Schritt b) eine Preßpassung zwischen dem pyrotechnischen Anzünder (12) und einer Wand (41) des ersten Gehäuseteils (48) ausbildet.

20. Verfahren nach einem der Ansprüche 17 bis 19, **dadurch gekennzeichnet, daß** der pyrotechnische Anzünder (12) im Schritt b) nicht vollständig in die Ausnehmung eingeführt wird, so daß der Anzünder (12) und das erste Gehäuseteil (48) eine Druckkammer (16) ausbilden.

21. Verfahren nach einem der Ansprüche 17 bis 20, **dadurch gekennzeichnet, daß** bei der Fertigung des ersten Gehäuseteils (48) in der
Ausnehmung ein Anschlag für den pyrotechnischen Anzünder (12) ausgebildet wird.

22. Verfahren nach einem der Ansprüche 17 bis 21, **dadurch gekennzeichnet, daß** sich im Schritt c) eine Formschlußverbindung zwischen dem pyrotechnischen Anzünder (12) und dem zweiten Gehäuseteil (50) ausbildet.

23. Verfahren nach einem der Ansprüche 17 bis 22, **dadurch gekennzeichnet, daß** das erste Ende (34) des ersten Gehäuseteils (48) im Schritt a) so profiliert gefertigt wird, daß die beiden Gehäuseteile (48, 50) nach dem Anspritzen und Aushärten des zweiten Gehäuseteils (50) eine unlösbare Formschlußverbindung ausbilden.

## Claims

1. A pyrotechnic actuator unit for actuating a vehicle safety system comprising a pyrotechnic igniter (12) and an external housing (14) made of plastic in which the pyrotechnic igniter (12) is accommodated, wherein in the external housing (14) a pressure chamber (16) is formed, the external housing (14) has a predefined breaking point (30) adapted for a tension means (32) to act thereon, wherein the external housing (14) is formed of a first plastic member (18) and a second member (20), and wherein the two members (18, 20) are permanently connected to each other, **characterized in that** the pressure chamber (16) is defined exclusively by the igniter (12) and by the external housing (14) and that the second member (20) is a plastic member.

2. The pyrotechnic actuator unit according to claim 1, **characterized in that** the igniter (12) and the first plastic member (18) define the pressure chamber (16).

3. The pyrotechnic actuator unit according to claim 1 or 2, **characterized in that** the pressure chamber (16) is provided in the area of a predefined breaking point (30) of the external housing (14).

4. The pyrotechnic actuator unit according to any one of the preceding claims, **characterized in that** the first plastic member (18) and the second plastic member (20) form a receiving compartment (24) in the external housing (14), the receiving compartment (24) being filled at least partly by the pyrotechnic igniter (12).

5. The pyrotechnic actuator unit according to any one of the claims 1 to 3 and claim 4, **characterized in that** the pressure chamber (16) is the residual area of the receiving compartment (24) which is not filled by the pyrotechnic igniter (12).

6. The pyrotechnic actuator unit according to claim 4 or 5, **characterized in that** the receiving compartment (24) is confined by the first plastic member (18) and by the second plastic member (20).

7. The pyrotechnic actuator unit according to any one of the preceding claims, **characterized in that** the first plastic member (18) is injection-molded to the igniter (12).

8. The pyrotechnic actuator unit according to any one of the claims 1 to 6, **characterized in that** the first plastic member (18) is a prefabricated injection-molded part and the second plastic member (20) is injection-molded to the first plastic member (18).

9. The pyrotechnic actuator unit according to any one of the claims 1 to 7, **characterized in that** the two plastic members (18, 20) are welded to each other.

10. The pyrotechnic actuator unit according to any one of the preceding claims, **characterized in that** the first plastic member (18) is permanently connected to the second plastic member (20) at a first end (34) and in the area of a second end (36) opposed to the first end (34) includes an arresting portion (38) for mounting the actuator unit (10).

11. The pyrotechnic actuator unit according to claim 10, **characterized in that** the first plastic member (18) includes an outer lateral guiding portion (52) which is closer to the second end (36) of the first plastic member (18) than the arresting portion (38).

12. The pyrotechnic actuator unit according to any one of the preceding claims, **characterized in that** the first plastic member (18) is permanently connected to the second plastic member (20) at a first end (34) and in the area of a second end (36) opposed to the first end (34) includes an anti-twist protection (54).

13. An airbag module for a vehicle safety system comprising an airbag (46), an inflator, a modular housing and a pyrotechnic actuator unit (10) according to any one of the preceding claims, **characterized in that** a tension means (32) is provided which is fixed prior to activation of the pyrotechnic igniter (12) by the actuator unit (10) and is released after activation of the pyrotechnic igniter (12).

14. The airbag module according to claim 13, **characterized in that** one end of the tension means (32) acts on a predefined breaking point (30) of the external housing (14) of the pyrotechnic actuator unit (10).

15. The airbag module according to claim 13 or 14, **characterized in that** one end of the tension means (32) acts on a portion (47) of the external housing (14) of the pyrotechnic actuator unit (10) which is separated from a fastening portion (49) of the pyrotechnic actuator unit (10) after activation of the pyrotechnic igniter (12).

16. A method of producing a pyrotechnic actuator unit (10) comprising a pyrotechnic igniter (12) and an external housing (14) made of plastic in which the pyrotechnic igniter (12) is accommodated, wherein the external housing (14) is formed of a first plastic member (18) and a second plastic member (20) which are permanently connected to each other and wherein a pressure chamber (16) defined exclusively by the igniter (12) and by the external housing (14) is formed in the external housing (14), and wherein the external housing (14) includes a predefined breaking point (30) adapted for a tension means (32) to act thereon, **characterized by** the following step of:
welding the two plastic members (18, 20) so that they form a largely closed receiving compartment (24) in the external housing (14), wherein the receiving compartment (24) is filled at least partly by the pyrotechnic igniter (12) and merely contact pins (26) of the igniter (12) project from the receiving compartment (24) through the second plastic member (20).

17. A method of producing a pyrotechnic actuator unit (10) comprising a pyrotechnic igniter (12) and an external housing (14) made of plastic in which the pyrotechnic igniter (12) is accommodated, wherein the external housing (14) is formed of a first housing member (18, 48) and a second housing member (20, 50) and wherein a pressure chamber (16) defined exclusively by the igniter (12) and by the external housing (14) is formed in the external housing (14), and wherein the external housing (14) includes a predefined breaking point (30) adapted for a tension means (32) to act thereon, **characterized by** the following steps:
a) the first housing member (48) is fabricated to have a recess for the pyrotechnic igniter (12);
b) the pyrotechnic igniter (12) is inserted in the recess;
c) the second housing member (50) is injection-molded to the pyrotechnic igniter (12) and to a first end (34) of the first housing member (48) so that a receiving compartment (24) for the pyrotechnic igniter (12) is substantially closed.

18. The method according to claim 17, **characterized in that** in step a) the first housing member (48) is manufactured as injection-molded part.

19. The method according to claim 17 or 18, **characterized in that** in step b) a press-fit is formed between the pyrotechnic igniter (12) and a wall (41) of the first housing member (48).

20. The method according to any one of the claims 17 to 19, **characterized in that** in step b) the pyrotechnic igniter (12) is not completely inserted in the recess so that the igniter (12) and the first housing member (48) form a pressure chamber (16).

21. The method according to any one of the claims 17 to 20, **characterized in that** when fabricating the first housing member (48) a stop for the pyrotechnic igniter (12) is formed in the recess.

22. The method according to any one of the claims 17 to 21, **characterized in that** in step c) a positive connection is formed between the pyrotechnic igniter (12) and the second housing member (50).

23. The method according to any one of the claims 17 to 22, **characterized in that** in step a) the first end (34) of the first housing member (48) is fabricated to be profiled such that the two housing members (48, 50) form a positive permanent connection after injection-molding and curing of the second housing member (50).

## Revendications

1. Actionneur pyrotechnique pour utilisation dans un système de sécurité de véhicule, avec un allumeur pyrotechnique (12) et un boîtier extérieur (14) en plastique, dans lequel l'allumeur pyrotechnique (12)
est logé, pour lequel une chambre de pression est définie dans le boîtier extérieur, le boîtier extérieur (14) possède une zone de rupture (30), qui est adaptée pour recevoir un moyen de traction (32), pour lequel le boîtier extérieur (14) est fait d'une première pièce en plastique (18) et d'une deuxième pièce (20), et pour lequel les deux pièces (18, 20) sont reliées ensemble en permanence, **caractérisé en ce que** la chambre de pression (16) est exclusivement définie par l'allumeur (12) et le boîtier extérieur (14), et que la deuxième pièce (20) est une pièce plastique.

2. Actionneur pyrotechnique selon la revendication 1, **caractérisé en ce que** l'allumeur (12) et la première pièce plastique (12) définissent la chambre de pression (16).

3. Actionneur pyrotechnique selon la revendication 1 ou 2, **caractérisé en ce que** la chambre de pression (16) est prévue dans la région de la zone de rupture (30) du boîtier extérieur (14).

4. Actionneur pyrotechnique selon l'une des revendications précédentes **caractérisé en ce que** la première pièce plastique (18) et la deuxième pièce plastique (20) définissent un réceptacle dans le boîtier extérieur (14), pour lequel le réceptacle est rempli au moins partiellement par l'allumeur pyrotechnique (12).

5. Actionneur pyrotechnique selon l'une des revendications 1 jusqu'à 3 et la revendication 4, **caractérisé en ce que** la chambre de pression (16) est la zone restante du réceptacle (24), qui n'est pas remplie par l'allumeur pyrotechnique (12).

6. Actionneur pyrotechnique selon la revendication 4 ou 5, **caractérisé en ce que** le réceptacle (24) est délimité par la première pièce plastique (18) et la deuxième pièce plastique (20).

7. Actionneur pyrotechnique selon l'une des revendications précédentes, **caractérisé en ce que** la première pièce plastique (18) est surmoulée sur l'allumeur (12).

8. Actionneur pyrotechnique selon l'une des revendications 1 jusqu'à 6, **caractérisé en ce que** la première pièce plastique (18) est une pièce fabriquée par injection et que la deuxième pièce plastique (20) est surmoulée sur la première plastique (18).

9. Actionneur pyrotechnique selon l'une des revendications 1 jusqu'à 7, **caractérisé en ce que** les deux pièces plastiques (18,20) sont soudées l'une à l'autre.

10. Actionneur pyrotechnique selon l'une des revendications précédentes, **caractérisé en ce que** la première pièce plastique (18) est reliée en permanence à une première extrémité (34) avec la deuxième pièce plastique (20), et possède dans la région de la première extrémité (34) et de la deuxième extrémité opposée (36) une section de verrouillage (38) pour renforcement de l'actionneur (10).

11. Actionneur pyrotechnique selon la revendication 10, **caractérisé en ce que** la première pièce plastique possède une zone de guidage (52) extérieure latérale, et que la deuxième extrémité (36) de la première pièce plastique (18) est plus proche de la section de verrouillage (38).

12. Actionneur pyrotechnique selon l'une des revendications précédentes, **caractérisé en ce que** la première pièce plastique (18) à une première extrémité (34) est reliée en permanence avec la deuxième pièce plastique (20), et qui possède dans la région entre la première extrémité (34) et la deuxième extrémité opposée (36) un système anti-rotation.

13. Module airbag pour un système de sécurité de véhicule, avec un sac gonflable (46), un générateur de gaz, un boîtier de module et un actionneur pyrotechnique (10) selon l'une des revendications précédentes, **caractérisé en ce que**, un moyen de traction (32) est prévu, lequel est fixé à l'actionneur pyrotechnique (10) avant l'activation de l'allumeur pyrotechnique (12) et après l'activation de l'allumeur pyrotechnique (12) est libre.

14. Module airbag selon la revendication 13, **caractérisé en ce qu'**une extrémité du moyen de traction (32) s'attache à une zone de rupture prédéfinie (30) du boîtier extérieur (14) de l'actionneur pyrotechnique (10).

15. Module airbag selon la revendication 13 ou 14, **caractérisé en ce que** une extrémité du moyen de traction (32) s'attache à une section (47) du boîtier extérieur (14) de l'actionneur pyrotechnique (10), qui après activation de l'allumeur pyrotechnique (12) est séparée d'une section renforcée (49) de l'actionneur pyrotechnique.

16. Procédé pour la fabrication d'un actionneur pyrotechnique (10), avec un allumeur pyrotechnique (12) et un boîtier extérieur (14) réalisé en plastique, dans lequel se loge un allumeur pyrotechnique (12), pour lequel le boîtier extérieur (14) est fait d'une première pièce plastique (18) et d'une deuxième pièce plastique (20), qui sont reliées l'une à l'autre en permanence, et pour lequel une chambre de pression (16) est définie dans le boîtier extérieur ((14), et pour lequel le boîtier extérieur (14) possède une zone de rupture prédéfinie (30), qui est reliée à un moyen de traction (32), caractérisé au travers des étapes suivantes :
Soudage des deux pièces en plastique (18, 20) de sorte que dans le boîtier extérieur (14) est défni un réceptacle pratiquement fermé (24), pour lequel le réceptacle (24) est rempli au moins partiellement par l'allumeur pyrotechnique (12), et seules les broches de contact (26) de l'allumeur (12) débouchent au travers de la deuxième pièce plastique (20) du réceptacle (24).

17. Procédé pour la fabrication d'un actionneur pyrotechnique (10), avec un allumeur pyrotechnique (12) et un boîtier extérieur (14) réalisé en plastique, dans lequel se loge un allumeur pyrotechnique (12), pour lequel le boîtier extérieur (14) consiste en une première partie de boîtier (18, 48) et une deuxième partie de boîtier (20, 50) et pour lequel se trouve dans le boîtier extérieur (14) une chambre de pression (16), celle-ci est uniquement définie par l'allumeur (12) et par le boîtier extérieur (14), et pour lequel le boîtier extérieur (14) possède une zone de rupture prédéfinie (30), qui est adaptée pour recevoir un moyen de traction (32), caractérisé aux travers des étapes suivantes :
a) la première partie du boîtier (48) est réalisée avec une cavité destinée à l'allumeur pyrotechnique (12)
b) l'allumeur pyroteclinique (12) est inséré dans la cavité
c) la deuxième partie du boîtier (50) est surmoulée sur l'allumeur pyrotechnique (12) et à la première extrémité (34) de la première partie du boîtier (48), de sorte que le réceptacle (24) pour l'allumeur pyrotechnique (12) est essentiellement fermé.

18. Procédé suivant la revendication 17, **caractérisé en ce que** la première partie du boiter (48) de l'étape a) est réalisée par injection.

19. Procédé suivant la revendication 17 ou 18, **caractérisé en ce que** se forme un montage avec ajustement serré à l'étape b) entre l'allumeur pyrotechnique (12) et une paroi (41) de la première partie du boîtier (48).

20. Procédé suivant une des revendications 17 jusqu'à 19, **caractérisé en ce que**, l'allumeur pyrotechnique (12) lors de l'étape b) n'est pas complètement inséré dans la cavité, de sorte que l'allumeur (12) et la première partie du boîtier (48) forment une chambre de pression (16).

21. Procédé suivant une des revendications 17 jusqu'à 20, **caractérisé en ce que**, de sorte que lors de fabrication de la première partie du boîtier (48) est formée dans la cavité une butée pour l'allumeur pyrotechnique (12).

22. Procédé suivant une des revendications 17 jusqu'à 21, **caractérisé en ce que**, lors de l'étape c) se forme une liaison par verrouillage de forme entre l'allumeur pyrotechnique (12) et la deuxième partie du boîtier (50).

23. Procédé suivant une des revendications 17 jusqu'à 22, **caractérisé en ce que**, la première extrémité (34) de la première partie du boîtier (48) est réalisé à l'étape a) avec un tel profil que, les deux parties du boîtier (48, 50) après injection et durcissement des deux parties du boîtier (50) forment une liaison par verrouillage de forme indémontable.
